# EUROPEAN PATENT SPECIFICATION

(11) **EP 1 089 796 B1**
(45) Date of publication and mention of the grant of the patent: **17.09.2003**
(21) Application number: 99924062.5
(22) Date of filing: 23.04.1999
(51) Int. Cl.: B01D 3/08, B01D 1/22

(54) **A METHOD FOR DESORPTION OF ONE OR MORE COMPOUNDS FROM AN ABSORBENT SOLUTION AND USE THEREOF**
VERFAHREN ZUR DESORPTION EINER ODER MEHRERER KOMPONENTEN AUS EINER ABSORPTIONSLÖSUNG UND SEINE ANWENDUNG
PROCEDE PERMETTANT DE DESORBER UN OU PLUSIEURS COMPOSES A PARTIR D'UNE SOLUTION ABSORBANTE ET SON UTILISATION

(30) Priority: 29.05.1998 NO 982490
(43) Date of publication of application: 11.04.2001
(73) Proprietor: NORSK HYDRO ASA, 0240 Oslo (NO)
(72) Inventor: EIMER, Dag, Arne, N-3931 Porsgrunn (NO)
(74) Representative: Bleukx, Lucas Lodewijk M.
(86) International application number: NO9900133
(87) International publication number: WO99062608

(56) References cited:
- DE-C- 294 083
- GB-A- 2 113 562
- US-A- 4 451 334
- US-A- 4 731 159

## Description

The present invention relates to a method for desorption of one or more compounds from an absorbent solution and further a use of the method.

A conventional absorption-desorption plant for gas separation consists of an absorption column, a desorption column, reboilers and heat exchangers.

The conventional desorption process in this plant is based on the rich solution containing absorbed gas coming from the absorber via a heat exchanger, which recovers heat from the regenerated solution coming hot from a reboiler connected to the desorption column. The rich solution is then fed to, or near to, the top of the desorption column. The rich solution flows downward in the desorption column countercurrent to steam. The absorbed gas gradually transfers from the solution to the gas as the solution flows down the column. The rising steam is generated in a separate reboiler, but live steam may in principle be used. Regenerated absorbent solution is pumped to absorption pressure, heat exchanged with the rich solution from the absorber and further cooled to absorption temperature in a separate cooler before entering the absorption column.

Reboilers, as applied in connection with the desorber, have a solution content that give, in this context, a significant retention time. The retention time distribution will resemble that of a stirred tank. These features are unfavourable when for instance amine solutions are used as an absorption agent due to the fact that it is difficult to control degradation of the amines through side reactions as well as direct degradation. The degradation may produce undesirable products which must be treated as a waste problem. The extent of at least some degradation reactions in amine solutions are more or less proportional to the solution's retention time at high temperatures in the apparatus used. High temperatures here are the desorption temperatures which normally are temperatures above 100°C. It must, however, be understood that degradation reactions may also occur at lower temperatures, but, as usual with chemical reactions, will increase in rate as temperature rises. The corresponding pressure is made up of the partial pressures of absorbate(s), absorbant(s) and solvent(s) over the solution at the existing conditions.

Glycol solutions used in gas dehydration are stripped at even higher temperatures. These solutions have a significant proportion of degradation products necessitating solution treatment and expensive bleed streams.

The main object of the present invention was to arrive at an improved method for desorption of one or more compounds from absorbent solutions, consisting especially of amines solutions or glycol solutions, to avoid side reactions and degradation of the absorbent.

Another object of the invention was to reduce the overall dimensions of the desorption equipment.

The inventor found that the problem mentioned above could be solved by using a desorber based on spinning discs technology.

Spinning discs have been used as a research tool within mass and heat transfer for a number of years. This is typically described in publications by a research group at the Department of Chemical & Process Engineering, University of Newcastle upon Tyne, e.g. R.J.J.Jachuck, and C.Ramshaw, (Heat Recovery Systems & CHP, vol 14, no 5, 475-491, 1994), K.V.K.Boodhoo, R.J.J.Jachuck, and C.Ramshaw, (Proceedings 1st Int. Conf. Process Intensification, BHR Group Conf. Series Publ. no 18, pages 175-180, 1995), R.J.J.Jachuck, and C.Ramshaw, England, K.V.K.Boodhoo, and J.C.Dalgleish, (IChemE Symp.Ser., no 141, 417-424, 1997), K.V.K.Boodhoo, R.J.J.Jachuck, and C.Ramshaw, (Proceedings 2nd Int. Conf. Process Intensification, BHR Group Conf. Series Publ. no 28, pages 125-133, 1997), where they have described the application of a spinning disc apparatus for styrene polymerisation where heat transfer through the disc surface is incorporated.

According to the above mentioned authors a spinning discs reactor is said to be advantageous as a reactor if the reaction is mass transfer limited, very fast, exothermic, and/or potentially hazardous. Hold-ups of solution in the spinning disc apparatus are low, thus reducing inventory. The extent of side-reactions favoured by long hold-ups will be strongly reduced by the use of spinning disc equipment. In styrene polymerisation these authors give a film thickness of 100 micrometer as typical. Heat transfer film coefficients as high as 20 kW/(m²K) have been observed. Studies have been made of tailored surfaces using grooves and coatings. Grooves were used when the highest heat transfer rates were obtained.

Only heat transfer data are given in the quoted literature, but it follows from this intense heat transfer that the mass transfer is also enhanced as may be inferred by the Reynolds and Chilton-Colburn analogies that describe the analogies between heat and mass transfer. (See e.g. E.L.Cussler, Diffusion: Mass transfer in fluid systems, Cambridge University Press, 1984, pages 445-448)

The actual reactor used for experiments by the Newcastle group mentioned above has been run at 300-1000 rpms. The diameter of the disc used was 360 mm, and this gives in practice 0.0755 m² of phase interface. Solution rates mentioned and used in experiments with this disc are 30 to 67 cm³/s. Heat transfer through the disc surface is possible. Streams may be fed to plates through the axle. Up to 200°C has been used, but does not represent an upper limit. Various forms of multiple discs arrangements may be used.

Use of spinning disc technology is also described in US patent no. US-A-4510057 where spinning discs are used in ammonia stripping from aqueous solutions. The method described in the present invention is, however, completely different from the method described in said patent in the way the discs are operated to achieve stripping of ammonia. Said patent foresees the use of a rotating disc, but this is rotating slowly to allow a biofilm to adhere such that this film is exposed alternately to the stripping gas phase and the solution phase. The other purpose of this exercise is to make oxygen from the gas phase available to the biofilm. There is no enhanced mass transfer involved as foreseen with the much higher rotational speed of the disc in the present invention, and long residence times, like days, are allowed for the adhering film. Thus, the method described in said patent would be impractical to use for the purpose of the present invention.

Furthermore, GB patent 5B-A-2113562 describes aqueous waste material treatment by using spinning discs with distances between discs from 1 to 30 mm, a preference for 10 mm is signalled. The object of this spinning disc apparatus is to perform absorption of oxygen into the aqueous waste material flowing over the discs in films. The mass transfer described in this patent is essentially liquid side limited (see e.g. the book by E.L. Cussler referred above), and there is no need for short solution hold-ups. Long hold-ups may even be advantageous but not essential. Heat transfer to overcome heat requirements as in a desorption process is not a feature. The only similarity is thus the practice of mass transfer whereas the present invention deals with practising simultaneous mass and heat transfer in a stripping process where the limiting conditions are different from oxygen absorption.

None of these previously known publications are describing the use of spinning discs in an absorption-desorption plant for gas separation.

A method for desorption of one or more compounds from an absorbent solution, according to the present invention, comprises that the absorbent solution is fed to the centre of one or more discs spinning around a hollow axle in a desorber, and that said solution flows in a film over the disc surface and leaving at the periphery of said disc and collected for optional re-entry at another disc, and where a heating medium is allowed to flow through an internal duct in the hollow axle and further into a void space in the disc while giving off heat to the disc surface causing a temperature increase in the film resulting in desorption of the absorbate from the solution along with non-absorbate vapour evaporation which constitutes a stripping medium utilised for enhancing the desorption of the absorbate from the solution.

Furthermore, the present invention relates to a use of a method for desorption of acid gas such as CO₂ and/or H₂S from an amine absorbent solution, desorption of water from a glycol absorbent solution and desorption of both acid gas and water from a glycol absorbent solution.

Another feature of the invention is that the heating medium is conducted to the disc via an internal duct in the hollow axle and passed over the disc's internal surface by means of a baffle plate and collected in another duct in the hollow axle.

Hot gas, steam, or thermal liquid (e.g. Dowtherm ^{(R)}) is used as heating medium.

Furthermore, another feature of the invention is that an external stripping medium is supplied to the desorber either countercurrently or co-currently over the spinning discs. The external stripping medium may enter the space between the discs from internal ducts in the hollow axle and flow up along the desorber periphery and leave at the top of the desorber, or run countercurrently over the discs and into the axle ducting from where it may leave at the top of the desorber.

Furthermore, another special feature of the invention is that the absorbent solution is collected in peripheral troughs on the inner wall of the desorber and routed via a duct to the centre of a disc below.

By using a desorber including spinning discs the heating can be performed on the discs and the discs will act both as a reboiler and a mass transfer device since the combination of heat and mass transfer will be possible. The heat supplied will produce steam internally in this mass transfer device to act as stripping gas. Steam may also be supplied live from an external source.

The only solution hold-ups are in the thin solution films on the disc(s) and some internal piping/ solution collecting devices, and this will ensure low solution retention time. In addition to low solution retention time, the residence time distribution will resemble that of plug flow which is advantageous in the strive towards minimisation of side-reactions.
Since the unit may be made compact, there may be room in the sump for a cooling section. Hence there will be no hot solution sump at the bottom of this device like we see in the conventional desorption column.

The invention will be further explained and envisaged in the figures and the examples.

Ways of carrying out the invention are described in detail below with reference to drawings which illustrate specific embodiments, in which:
Figure 1 shows a conventional absorption-desorption plant for gas separation.
Figure 2 shows a desorber including spinning discs according to the invention.
Figure 3a and 3b shows how an external stripping medium stream may be routed either countercurrently or co-currently over the spinning discs.
Figure 3c shows how the absorbent solution may be routed over the discs in a pattern of parallel and serial flows exposed to the desorption / stripping medium.
Figure 4 shows how the solution stream may be collected in peripheral troughs on the inner wall of the desorber.
Figure 5 shows how the solution stream may be collected in peripheral troughs on the inner wall of the desorber and routed via ducts to the centre of a disc.

### Figure 1:

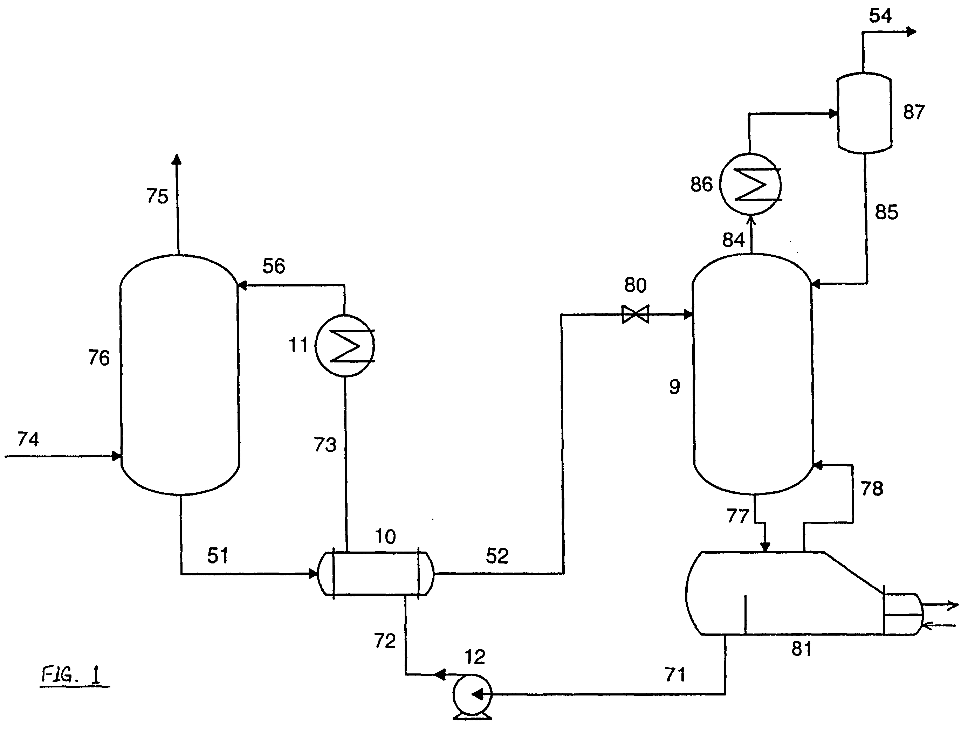

Figure 1 shows a conventional absorption desorption plant.
The untreated raw gas 74 enters an absorption column 76 and moves upwards in countercurrent flow to a lean absorbent stream 56. The treated gas 75 leaves over the top while the now rich absorbent stream 51 leaves from the bottom sump of the column. The rich absorbent stream 51 is heated in heat exchanger 10 by warm, regenerated, lean absorbent 72 to recover heat. The lean absorbent stream 73 is further cooled in cooler 11 by typically cooling water before returning to absorption column 76. The heated stream 52 enters at or near the top of the desorption column 9 where it flows downwards in countercurrent flow to steam and desorbed absorbate. If the absorption column 76 operates at pressure, the stream 52 is expanded over the valve 80 before entering the desorption column 9. At the bottom of the desorption column 9 there is a solution sump from where a stream 77 typically flows to a reboiler 81 where heat is added. From the reboiler a vapour stream 78 returns to the column 9 to constitute the upward flowing stripping gas that eventually leaves over the top as stream 84 carrying the absorbate. Absorbent in stream 84 is recovered in the partial condenser 86 and returned to the column as stream 85 from the separator 87 while the absorbate leaves in stream 54. The bottom stream 71 from the reboiler 81 is pumped 12 to essentially absorption column pressure before going to the heat recovery exchanger 10 as described above.

### Figure 2:

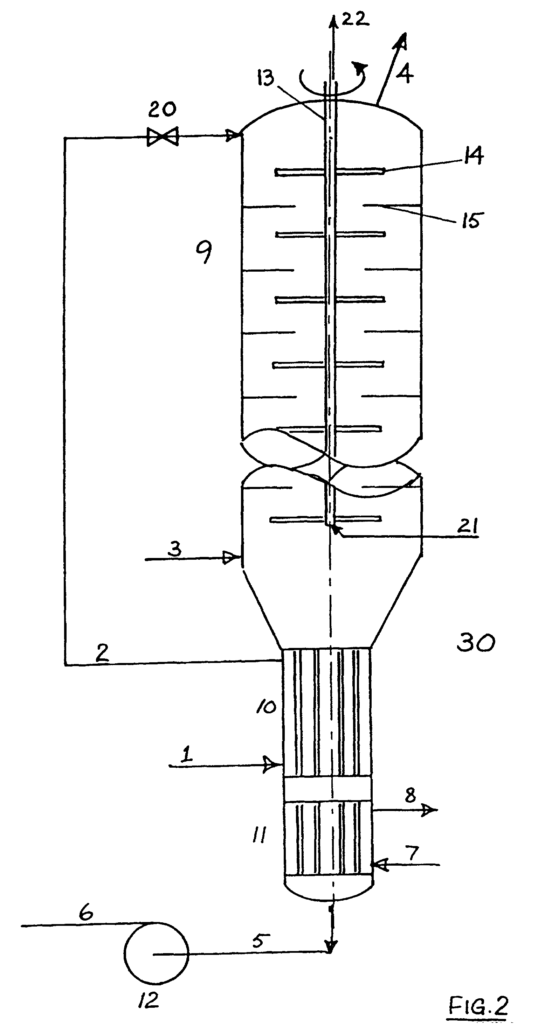

Figure 2 shows a desorption unit 30 for stripping one or more components of CO₂ and/or H₂S or water from a rich absorbent solution where the unit is based on the use of spinning discs. Heat recovery from the warm, lean, regenerated absorbent solution and cooling to absorption temperature is also shown as integrated in the desorber unit 30. The rich absorbent solution from the absorber 1 enters the desorber unit 30 at the heat recovery exchanger 10 and leaves in a warmer condition as stream 2 that enters the desorber 9 at its top. The desorber is the section of the desorption unit 30 containing the spinning discs. The pressure reduction valve 20 may, or may not, be necessary, it depends on the absorption pressure. The spinning discs rotate around an axle 13 at a speed chosen as convenient for the purpose. The solution is fed near the axle position on the discs 14 and leaves at the plate periphery. A possible additional stripping medium 3, which depends on the application, flows countercurrently to the solution in the desorber aided by baffles 15, and the stripping gas with absorbate leaves over the top as stream 4. Heat for the desorption is provided by a heating medium 21 entering through ducts in the hollow axle from where it enters a void space in the discs 14. (This is further clarified in figure 5). The stream with used heating medium leaves over the top as stream 22. The regenerated, lean absorbent solution flows directly to the heat recovery exchanger 10 for its first cooling and then to the cooler 11 to be cooled to absorption temperature by a coolant entering as stream 7 and leaving as stream 8. The desorber 9, and the heat exchangers 10 and 11 comprises the desorber unit 30. The cold, lean, regenerated absorbent solution is collected in a bottom sump before it flows as stream 5 to the recirculation pump 12 which transports the lean absorbent back to the absorption column, stream 6. No separate reboiler is needed since the required heat is supplied via the stripping stream 3 or by heat transfer from the inside of the spinning discs. It must be realised that heat for desorption may be supplied through both the stripping medium 3 and the heating medium 21. A balance between these streams must be struck. It is quite possible to do away with the stripping medium 3 and use only the stream 21 for supply of heat. In acid gas desorption this is common whereas water desorption from glycol solutions uses both the streams 3 and 21.

### Figure 3.

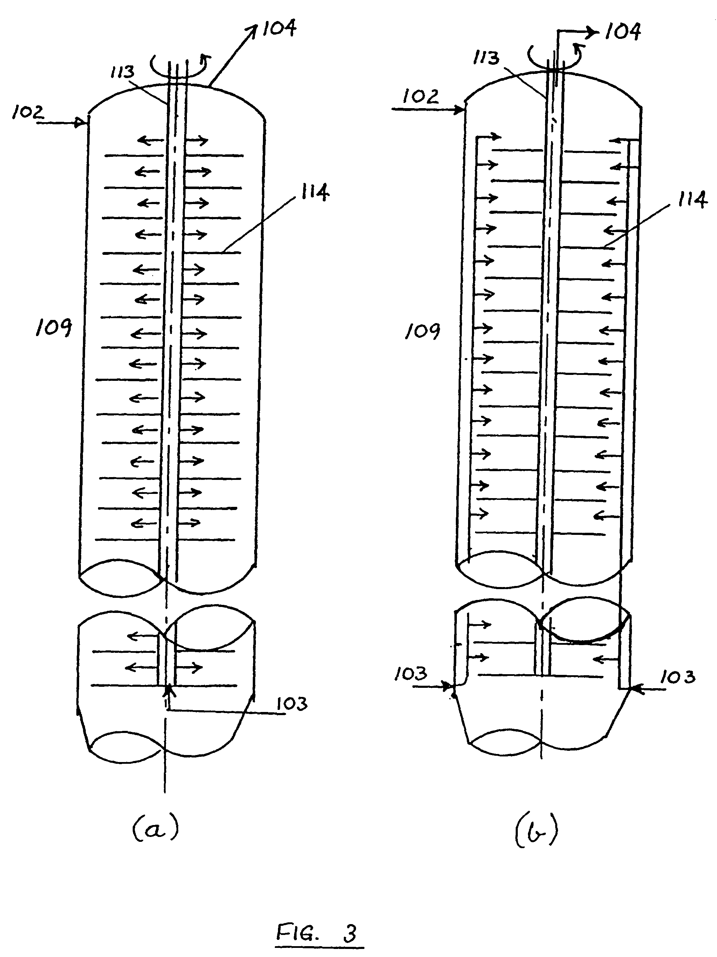

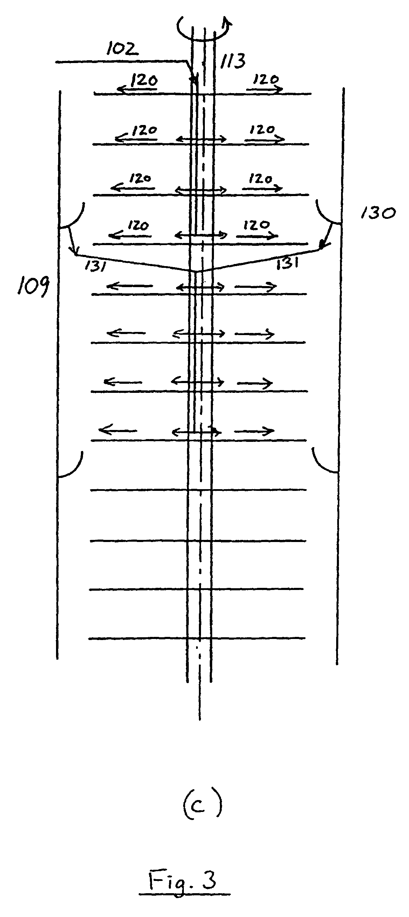

The figures 3a and 3b do not show the use of a heating medium inside the discs, but that is only to simplify the figure. The use of such heating medium must be assumed. The figures 3a and 3b show how the stripping stream 103, e.g. steam, may be routed either countercurrently or co-currently over the spinning discs 114. Even a combination may be used, but this is not shown. The rich absorbent solution 102 enters at the top of the desorber 109 which is equipped with spinning discs 114 mounted on an axle 113. As before the solution is fed to the discs near the axle and is collected at the periphery. The stripping stream 103 enters each disc from the hollow axle with internal ducts, figure 3a, and flows up along the desorber periphery and leaves as stream 104. The alternative is shown in figure 3b where the stripping stream 103 runs countercurrently over the discs and into the axle ducting from where it leaves at the end as stream 104. The figure 3c show how the solution 102 is fed into the axle duct at the top of the desorber. The solution 102 may be collected at the periphery and fed to the centre of the discs in a pattern of parallel and serial flow with respect to the solution flow pattern as illustrated in figure 3c. Figure 3c shows the solution stream flowing in thin films 120 over the discs, being collected in throughs 130 positioned at intervals not necessarily coinciding with the discs, and reintroduced to the centre of the discs by convenient means.

### Figure 4:

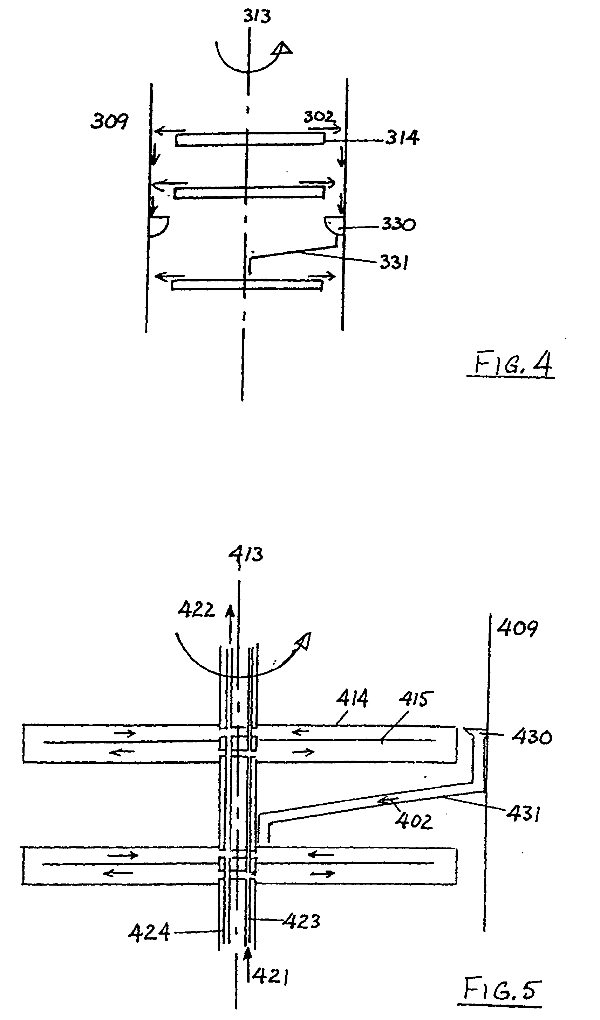

Figure 4 shows how the solution stream 302 may be collected in peripheral troughs 330 on the inner wall of the desorber 309. The collected solution is routed via duct 331 to the centre of a disc 314 below. It is not necessary to collect the solution after every disc, e.g. if the solution runs in parallel over adjacent discs.

### Figure 5:

Figure 5 shows how the solution stream 402 may be collected in peripheral troughs 430 on the inner wall of the desorber 409. The collected solution is routed via duct 431 to the centre of a disc 414 below. It is not necessary to collect the solution after every disc, e.g. if the solution runs in parallel over adjacent discs. The figure further shows a heating medium stream 421 may be conducted to the discs 414 via a duct 423 and pass over the disc's surface as shown by the aid of a baffle plate 415 and be collected in another duct 424. Both ducts are routed in the hollow axle 413. The used heating medium leaves as stream 422 at the top.

### Example 1:

This example describes a case where CO₂ is removed from the exhaust gas of a gas turbine producing useful power without the use of a steam turbine attachment. The rich absorbent solution, 30 weight-% in MEA (monoethanol amine) contains 3.2 kg CO₂/s removed from the exhaust gas. The energy requirement for desorption is 10 MW of heat. With an overall heat transfer coefficient of 5 kW/m2.K and a temperature difference of 30 K between warm and cold side, 67 m₂ of disc surface are required. This is accomodated on 85 discs of 1.0 meter diameter placed at 8 cm distance giving a length of about 7 meters for the unit.

The conventional desorption column equivalent of the apparatus described in this example has order of magnitude dimensions of 20 meters height and 3 meters diameter.

### Example 2:

In a typical gas dehydration glycol unit 1 m³/h of rich solution based on triethylene glycol must be stripped of water. The energy requirement is 140 kW. Achieving the same heat transfer coefficient as above and using 15 K as temperature difference between warm and cold sides, 1 m² disc area is required. This is accommodated by 4 discs of 0.8 m diameter. The residence time for the solution is estimated to be less than 2 seconds.

### Example 3:

In a combined process for removal of trace amounts of H₂S and gas dehydration, 2 m³/h of rich solution based on MEA and monoethyleneglycol must be stripped of water and H₂S resulting from removal of 40 ppm H₂S from the gas treated in the absorption unit. The energy requirement is 300 kW. Achieving the same heat transfer coefficient as above and using 25 K as temperature difference between warm and cold sides, 1 m² disc area is required. This is accommodated by 6 discs of 0.8 m diameter.

By the present invention the inventor has arrived at an improved method for desorption of one or more compounds from absorbent solutions. The examples, where the operating pressure was 1-3 bar, show that the present invention results in more compact desorption units with very much shorter residence times for the absorbent solution. It is more compact than conventional desorption units. When applied to stripping of acid gas from amine absorbent solutions, unwanted side reactions and degradation of the amine absorbent solution are avoided. The same can be said for the stripping of glycol solutions containing water with or without acid gas. The piping is reduced, and partially eliminated, because more functions are built together in one assembly compared to the conventional equipment. The radical reduction in solution hold-ups, and thus retention times, virtually eliminates the degradation of the absorbent through direct break-down and undesirable side reactions that usually takes place, particularly in the reboiler.

## Claims

1. A method for desorption of one or more compounds from an absorbent solution,
**characterised in that**
the absorbent solution is fed to the centre of one or more discs spinning around a hollow axle in a desorber, and that said solution flows in a film over the disc surface and leaving at the periphery of said disc and collected for optional re-entry at another disc, and where a heating medium is allowed to flow through an internal duct in the hollow axle and further into a void space in the disc while giving off heat to the disc surface causing a temperature increase in the film resulting in desorption of the absorbate from the solution along with non-absorbate vapour evaporation which constitutes a stripping medium utilised for enhancing the desorption of the absorbate from the solution.

2. A method according to claim 1,
**characterised in that**
the heating medium is conducted to the disc via an internal duct in the hollow axle and passed over the disc's internal surface by means of a baffle plate and collected in another duct in the hollow axle.

3. A method according to claim 1,
**characterised in that**
hot gas, steam, or thermal liquid is used as heating medium.

4. A method according to claim 1,
**characterised in that**
an external stripping medium is supplied to the desorber and flows in the space between the discs to enhance the desorption.

5. A method according to claim 4,
**characterised in that**
the external stripping medium is routed either countercurrently or co-currently over the spinning discs.

6. A method according to claim 4,
**characterised in that**
the external stripping medium enters the space between the discs from internal ducts in the hollow axle and flows up along the desorber periphery and leaves at the top of the desorber.

7. A method according to claim 4,
**characterised in that**
the external stripping medium runs countercurrently over the discs and into the axle ducting from where it leaves at the top of the desorber.

8. A method according to claim 1,
**characterised in that**
the absorbent solution is collected in peripheral troughs on the inner wall of the desorber.

9. A method according to claim 1,
**characterised in that**
the absorbent solution is collected and routed via a duct to the centre of a disc below.

10. A method according to claim 1,
**characterised in that**
the regenerated, lean absorbent solution is cooled by-rich solution coming from the absorber in a heat recovery exchanger arranged in the desorber unit before it flows back to the absorber.

11. A method according to claim 1,
**characterised in that**
the regenerated, lean absorbent solution is cooled to absorption temperature in a cooler arranged in the desorber unit before it flows back to the absorber.

12. Use of a method according to claim 1-11 for desorption of acid gas as CO₂ and/or H₂S from an amine absorbent solution.

13. Use of a method according to claim 1-11 for desorption of water from a glycol absorbent solution.

14. Use of a method according to claim 1-11 for desorption of both acid gas as CO₂ and/or H₂S and water from a glycol absorbent solution.

## Patentansprüche

1. Verfahren zur Desorption von einer oder mehreren Verbindungen aus einer Absorbenslösung,
**dadurch gekennzeichnet, dass**
die Absorbenslösung in die Mitte von einer oder mehreren Scheiben eingespeist wird, die sich in einem Desorber um eine Hohlachse drehen, und dass die Lösung in einem Film über die Scheibenoberfläche fließt und an der Peripherie der Scheibe abgeht und zum optionalen erneuten Eintritt in eine weitere Scheibe aufgefangen wird, und wobei ein Heizmedium durch ein inneres Röhrensystem in der Hohlachse und des Weiteren in einen Hohlraum in der Scheibe fließen gelassen wird, während Wärme an die Scheibenoberfläche abgegeben wird, wodurch ein Temperaturanstieg in dem Film hervorgerufen wird, der zur Desorption des Absorbats aus der Lösung zusammen mit der Entwicklung von Nicht-Absorbatdampf führt, der ein Strippmedium bildet, das zur Erhöhung der Desorption des Absorbats aus der Lösung genutzt wird.

2. Verfahren nach Anspruch 1,
**dadurch gekennzeichnet, dass**
das Heizmedium über ein inneres Röhrensystem in der Hohlachse zu der Scheibe geführt und mittels einer Prallplatte über die innere Oberfläche der Scheibe geleitet und in einem anderen Röhrensystem in der Hohlachse aufgefangen wird.

3. Verfahren nach Anspruch 1,
**dadurch gekennzeichnet, dass**
heißes Gas, Wasserdampf oder Erwärmungsflüssigkeit als Heizmedium verwendet wird.

4. Verfahren nach Anspruch 1,
**dadurch gekennzeichnet, dass**
dem Desorber ein externes Strippmedium zugeführt wird und in den Raum zwischen den Scheiben fließt, um die Desorption zu erhöhen.

5. Verfahren nach Anspruch 4,
**dadurch gekennzeichnet, dass**
das externe Strippmedium entweder im Gegenstrom oder im Gleichstrom über die sich drehenden Scheiben geführt wird.

6. Verfahren nach Anspruch 4,
**dadurch gekennzeichnet, dass**
das externe Strippmedium aus inneren Röhrensystemen in der Hohlachse in den Raum zwischen den Scheiben eintritt und entlang der Peripherie des Desorbers aufwärts fließt und im oberen Bereich des Desorbers abgeht.

7. Verfahren nach Anspruch 4,
**dadurch gekennzeichnet, dass**
das externe Strippmedium im Gegenstrom über die Scheiben und in das Achsenröhrensystem läuft, von wo es im oberen Bereich des Desorbers abgeht.

8. Verfahren nach Anspruch 1,
**dadurch gekennzeichnet, dass**
die Absorbenslösung in peripheren Rinnen auf der Innenwand des Desorbers aufgefangen wird.

9. Verfahren nach Anspruch 1,
**dadurch gekennzeichnet, dass**
die Absorbenslösung aufgefangen und durch ein Röhrensystem zu der Mitte einer darunter befindlichen Scheibe geführt wird.

10. Verfahren nach Anspruch 1,
**dadurch gekennzeichnet, dass**
die regenerierte, magere Absorbenslösung durch fette Lösung, die aus dem Absorber kommt, in einem Wärmerückgewinnungsaustauscher abgekühlt wird, der in der Desorberanlage angeordnet ist, bevor sie in den Absorber zurückfließt.

11. Verfahren nach Anspruch 1,
**dadurch gekennzeichnet, dass**
die regenerierte, magere Absorbenslösung in einem Kühler, der in der Desorberanlage angeordnet ist, auf Absorptionstemperatur abgekühlt wird, bevor sie in den Absorber zurückfließt.

12. Verwendung eines Verfahrens nach Anspruch 1 bis 11 zur Desorption von saurem Gas wie CO₂ und/oder H₂S aus einer Aminabsorbenslösung.

13. Verwendung eines Verfahrens nach Anspruch 1 bis 11 zur Desorption von Wasser aus einer Glykolabsorbenslösung.

14. Verwendung eines Verfahrens nach Anspruch 1 bis 11 zur Desorption von sowohl saurem Gas, wie CO₂ und/oder H₂S, als auch Wasser aus einer Glykolabsorbenslösung.

## Revendications

1. Procédé permettant de désorber un ou plusieurs composés à partir d'une solution absorbante,
**caractérisé en ce que**
on alimente la solution absorbante au centre d'un ou plusieurs disques rotatifs autour d'un axe creux dans un désorbeur, et que ladite solution s'écoule sous forme d'un film sur la surface du disque et qu'elle quitte la périphérie dudit disque et qu'elle est captée pour entrer à nouveau de façon facultative vers un autre disque, et **en ce qu'**un milieu chauffant peut s'écouler à travers un conduit interne dans l'axe creux et ensuite dans un espace vide dans le disque tout en libérant la chaleur vers la surface du disque provoquant une augmentation de température dans le film résultant en la désorption du produit absorbé depuis la solution en même temps que l'évaporation de vapeur du produit non absorbé qui constitue un milieu de décapage utilisé pour améliorer la désorption du produit absorbé à partir de la solution.

2. Procédé selon la revendication 1,
**caractérisé en ce que**
l'on conduit le milieu chauffant vers le disque via un conduit interne dans l'axe creux et qu'on le fait passer sur la surface interne du disque au moyen d'une chicane et qu'on le collecte dans un autre conduit dans l'axe creux.

3. Procédé selon la revendication 1,
**caractérisé en ce que**
l'on utilise comme milieu chauffant un gaz chaud, de la vapeur, ou un liquide thermique.

4. Procédé selon la revendication 1,
**caractérisé en ce que**
l'on fournit un milieu externe de décapage au désorbeur et qu'on le fait s'écouler dans l'espace entre les disques pour améliorer la désorption.

5. Procédé selon la revendication 4,
**caractérisé en ce que**
l'on dirige le milieu externe de décapage soit à contre courant soit dans le sens du courant sur les disques rotatifs.

6. Procédé selon la revendication 4,
**caractérisé en ce que**
le milieu externe de décapage entre dans l'espace entre les disques depuis les conduits internes dans l'axe creux et s'écoule à la périphérie du désorbeur et est évacué dans la partie supérieure du désorbeur.

7. Procédé selon la revendication 4,
**caractérisé en ce que**
le milieu externe de décapage circule à contre courant sur les disques et dans le conduit d'axe depuis lequel il s'évacue à la partie supérieure du désorbeur.

8. Procédé selon la revendication 1,
**caractérisé en ce que**
on collecte la solution absorbante dans des bacs périphériques sur la paroi interne du désorbeur.

9. Procédé selon la revendication 1,
**caractérisé en ce que**
on collecte la solution absorbante et on la dirige au moyen d' conduit vers le centre d'un disque inférieur.

10. Procédé selon la revendication 1,
**caractérisé en ce que**
on refroidit la solution régénérée pauvre au moyen d'une solution riche venant de l'absorbeur dans un récupérateur échangeur de chaleur disposé dans l'élément désorbeur avant qu'elle ne s'écoule en retour vers l'absorbeur.

11. Procédé selon la revendication 1,
**caractérisé en ce que**
l'on refroidit la solution régénérée, pauvre absorbante à la température d'absorption dans un refroidisseur disposé dans l'élément désorbeur avant qu'elle ne s'écoule en retour vers l'absorbeur.

12. Utilisation d'un procédé selon les revendications 1 à 11 pour la désorption de gaz acides tels que le CO₂ et/ou le H₂S à partir d'une solution absorbante d'amine.

13. Utilisation d'un procédé selon les revendications 1 à 11 pour la désorption de l'eau depuis une solution absorbante de glycol.

14. Utilisation d'un procédé selon les revendications 1 à 11 pour la désorption à la fois de gaz acides tels que le CO₂ et/ou le H₂S et de l'eau à partir d'une solution absorbante de glycol.
